# EUROPEAN PATENT APPLICATION

(11) **EP 4 653 211 A1**
(43) Date of publication of application: **26.11.2025**
(21) Application number: 24215443.3
(22) Date of filing: 26.11.2024
(51) Int. Cl.: B60G 15/06, B60G 17/027

(54) **SUSPENSION HYDRAULIC LIFT ACTUATOR**

(30) Priority: 23.05.2024 CN 202410650215
(71) Applicant: BeijingWest Industries Co. Ltd., 102400 Beijing (CN)
(72) Inventor: SZYMANSKI, Jerzy Piotr, 95700 Roissy en France (FR); PREVOT, Benoit, 95700 Roissy en France (FR)
(74) Representative: Lukaszyk, Szymon

(57) **Abstract**

A suspension hydraulic lift system having a collapsed position and an extended position including a support tube having a first section and second section. The diameter of the first section is less than the diameter of the second section to define a tube shoulder between the first and second sections. A housing has a fluid passage in fluid communication with a fluid chamber. The housing is mounted about the support tube. The fluid chamber is adjacent the second section, when the suspension hydraulic lift system is in the collapsed position and is adjacent the first section when the suspension hydraulic lift system is in the extended position. The fluid passage and the fluid chamber receive hydraulic fluid to act upon the tube shoulder to collapse and extend the housing and the step support tube relative to one another.

## Description

### Field of the Invention

This invention relates generally to hydraulic lift actuators particularly for use on vehicle suspensions.

### Background of the invention

Typical hydraulic lift actuator systems are installed over a damper body. These systems use an actuator concept wherein the moving element is the piston which is pushed out of the body to raise and lower the vehicle. These systems have issues with side loads that are not evenly transferred along the extension length. They are also not universal solutions requiring the damper tube or top mount to be integral to the system solution which makes them more expensive to manufacture.

It is desirable to have a hydraulic lift actuator system that is a universal system that can be easily installed over various damper tubes or integrated with various top mount attachments. Additionally, it is desirable to have a hydraulic lift actuator system that provides for the even transfer of side loads along its travel distance.

### Summary of the invention

In general terms, this invention provides a suspension hydraulic lift system having a collapsed position and an extended position. The present invention takes advantage of two coaxial cylinders each having different diameters for guiding the external body to be lifted.

The present invention has a support tube with two main working diameters over which a housing is positioned for displacing the external body part. This support tube creates dimensional imbalance, which under pressure creates force allowing the housing and support tube to reciprocate with respect to each other and lift. The actuator stroke is limited through an internal collar. Seals are positioned statically within grooves in the housing body to seal the support tube surfaces. Guides are also provided to limit friction forces. A spring seat could be installed as a separate part or integrally with the housing.

The support tube has a first section and second section, with the first section having a first diameter, and the second section having a second diameter. The first diameter is less than the second diameter defining a tube shoulder between the first and second sections.

The housing has a fluid passage in fluid communication with a fluid chamber. The housing is mounted about the stepped support tube. The fluid chamber is adjacent the second section, when the suspension hydraulic lift system is in the collapsed position, and the fluid chamber is adjacent the first section when the suspension hydraulic lift system is in the extended position. The housing has a first part with a first part diameter and a second part with a second part diameter. The first part diameter is adjacent the first diameter and the second part diameter is adjacent the second diameter with the first part diameter being less than the second part diameter to define a ledge.

The fluid passage and the fluid chamber receive hydraulic fluid to act upon the tube shoulder to collapse and extend the housing and the support tube relative to one another.

A collar extends about and projects radially outwardly from the second tube portion of the stepped tube adjacent the tube shoulder to limit actuator travel at the extended position.

The suspension hydraulic lift system further includes a ridge protruding inwardly from the housing adjacent the second section which is adapted to engage the collar to limit actuator travel at the extended position. The suspension hydraulic lift system includes guides and seals mounted to the housing that engage the support tube and keep it aligned along its path of travel.

These and other features and advantages of this invention will become more apparent to those skilled in the art from the detailed description of a preferred embodiment. The drawings that accompany the detailed description are described below.

### Brief description of the drawings

Fig. 1 is a sectional view of the suspension lift actuator of the present invention.
Fig. 2 is a partial sectional view.

### Detailed description of a preferred embodiment

The hydraulic lift actuator of the present invention is shown generally at 10 in the figures. The actuator of the present invention is used primarily for adjusting the height of all or part of a vehicle.

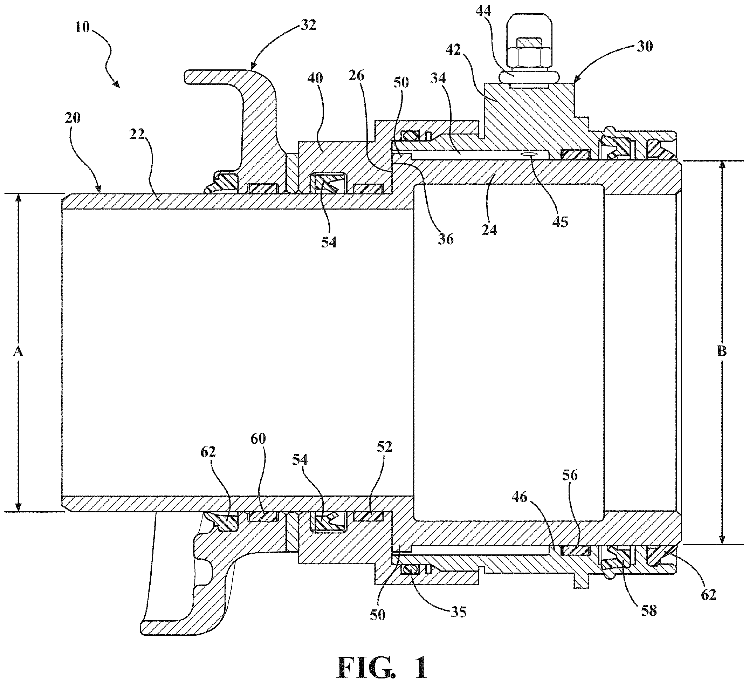

Fig. 1 shows a sectional view of the actuator 10 in a collapsed position. As shown in Fig. 1, the actuator includes a stepped support tube 20 which may contain a hydraulic damper. A housing 30 is coupled to a spring seat 32, each disposed annularly about the stepped support tube and configured to translate in an axial direction between a collapsed position and an extended position for raising and/or lowering a corresponding corner of a vehicle.

The spring seat 32 is configured to receive an end of a coil spring that is disposed helically around the stepped support tube 20. The spring seat 32 may be integrally formed with the housing 30. Alternatively, the spring seat 32 may be a separate part.

A fluid chamber 34 is defined between the stepped support tube 20 and the housing 30 for receiving a fluid, such as hydraulic fluid or air, to actuate the actuator 10. The support tube 20 includes a first section 22 having a first outside diameter A. The stepped support tube 20 also includes a second section 24 having a second outside diameter B that is larger than the first outside diameter A. The stepped support tube 20 defines a tube shoulder 26 with an annular shape and has a surface that extends radially outwardly from the first section 22 to the second section 24.

The housing 30 includes a first part 40 and a second part 42, although the housing 30 could have a different configuration, such a single-piece construction. As illustrated, the housing part 40 and 42 could be threaded, press fit, welded, etc. A seal 35 is shown to seal the parts 40 and 42. The housing 30 includes a fluid coupling 44 for connection to an external pressure source and to provide fluid communication to the fluid chamber 34 via a passage 45.

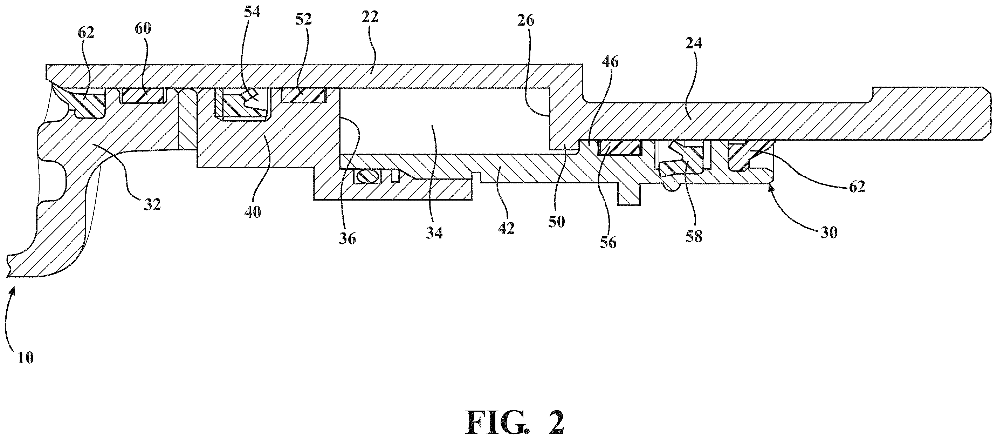

The difference in the outside diameters A, B, under pressure, creates a force that causes the housing 30 to translate in an axial direction relative to the support tube 20. The housing 30 defines a ledge 36 that extends in a radial direction, and which abuts the tube shoulder 26 when the actuator 10 is in the collapsed position, as shown in Fig. 1. The ledge 36 and shoulder 26 move axially away from one another as the actuator 10 moves away from the collapsed position and to the extended position, as shown in Fig. 2.

The housing 30 defines an annular ridge 46 that extends radially inwardly into contact with an outer surface of the second section 24. The second section 24 defines a collar 50 that extends annularly thereabout, and which engages the annular ridge 46 to limit actuator travel at the extended position, as shown in Fig. 2.

A first guide 52 and a first seal 54 are each disposed in the first part 40 of the housing 30 and are configured to slide along an outside surface of the first section 22 of the stepped support tube 20. A second guide 56 and a second seal 58 are each disposed in the second part 42 of the housing 30 and are configured to slide along an outside surface of the second section 24 of the stepped support tube 20. The guides 52, 56 and the seals 54, 58, together, provide for relative controlled movement between the housing 30 and the stepped support tube 20 while preventing leakage to maintain fluid pressure within the fluid chamber 34. An additional guide 60 is mounted within the spring sat 32 for additional support. Wiper seal 62 are also provided for additional sealing.

The foregoing invention has been described in accordance with the relevant legal standards, thus the description is exemplary rather than limiting in nature. Variations and modifications to the disclosed embodiment may become apparent to those skilled in the art and do come within the scope of the invention. Accordingly, the scope of legal protection afforded this invention can only be determined by studying the following claims.

## Claims

1. A suspension hydraulic lift system having a collapsed position and an extended position comprising:
a stepped support tube (20) having a first section (22) and a second section (24), said first section (22) having a first diameter, said second section (24) having a second diameter, said first diameter being less than said second diameter defining a tube shoulder (26) between said first (22) and second (24) sections;
a housing (30) having a fluid passage in fluid communication with a fluid chamber (34), said housing (30) is mounted about said stepped support tube (20); said fluid chamber (34) is adjacent said second section (24), when said suspension hydraulic lift system is in said collapsed position, and said fluid chamber (34) is adjacent said first section (22) when said suspension hydraulic lift system is in said extended position;
said fluid passage and said fluid chamber (34) is adapted to receive fluid to act upon said tube shoulder (26) to collapse and extend said housing (30) and said stepped support tube (20) relative to one another.

2. The suspension hydraulic lift system of claim 1, wherein said housing (30) has a first part (40) with a first part diameter and a second part (42) with a second part diameter, said first part diameter is adjacent said first diameter and said second part diameter is adjacent said second diameter; said first part diameter is less than said second part diameter defining a ledge (36), said ledge (36) is opposite said tube shoulder (26).

3. The suspension hydraulic lift system of claim 2, further including a collar (50) extending about and projecting radially outwardly from said second section (24) of said stepped support tube (20) adjacent said tube shoulder (26) to limit said stepped support tube (20) travel at said extended position.

4. The suspension hydraulic lift system of claim 3, further including a ridge (46) protruding inwardly from said housing (30) adjacent said second section (24); said ridge (46) being adapted to engage said collar (50) to limit actuator travel at said extended position.

5. The suspension hydraulic lift system of claim 4, wherein said chamber (34) has a first end defined by said ledge (36) and a second end defined by said ridge (46).

6. The suspension hydraulic lift system of any one of claims 1 to 5, further including at least a first guide (52) and first seal (54) mounted in said housing (30) and engaging said second section (24) and at least a second guide (56) and second seal (58) mounted in said housing (30) and engaging said first section (22).

7. The suspension hydraulic lift system of any one of claims 1 to 6, wherein said housing (30) further includes a spring seat (32).

8. The suspension hydraulic lift system of any one of claims 1 to 7,
wherein the housing (30) having interior surfaces, said housing (30) receives said stepped support tube (20), said stepped support tube (20) is adapted to reciprocate within said housing (30);
wherein the fluid chamber (34) is positioned between said stepped support tube (20) and said housing (30).

9. The suspension hydraulic lift system of any one of claims 1, 6 and 7, wherein the suspension hydraulic lift system is configured for raising and lowering a vehicle, wherein the housing (30) has opposed open ends defining an interior space with a ledge (36) positioned between said open ends;
wherein the support tube (20) has opposed tube ends mounted within said housing (30) for reciprocal movement with respect to said housing, said tube shoulder (26) is located between said opposed tube ends, said tube shoulder (26) is opposite said ledge (36);
wherein the fluid chamber (34) is positioned between said housing (30) and said support tube (20), said fluid chamber (34) is adapted to receive the fluid to act upon said tube shoulder (26) and said ledge (36) to reciprocate said housing (30) and said support tube (20) with respect to each other.

10. The suspension hydraulic lift system of claim 9, wherein said housing (30) has a first part (40) with a first part diameter and a second part (42) with a second part diameter, said first part diameter is adjacent said first diameter and said second part diameter is adjacent said second diameter; said first part diameter is less than said second part diameter defining said ledge (36).

11. The suspension hydraulic lift system of claim 10, wherein the suspension hydraulic lift system further includes a collar (50) extending about and projecting radially outwardly from said second section (24) of said support tube (20) adjacent said tube shoulder (26) to limit said support tube (20) travel at said extended position.

12. The suspension hydraulic lift system of claim 11, further including a ridge(46) protruding inwardly from said housing (30) adjacent said second section (24); said ridge (46) being adapted to engage said collar (50) to limit actuator travel at said extended position.
